# EUROPÄISCHE PATENTSCHRIFT

(11) **EP 0 940 660 B1**
(45) Veröffentlichungstag und Bekanntmachung des Hinweises auf die Patenterteilung: **04.10.2006**
(21) Anmeldenummer: 99104363.9
(22) Anmeldetag: 04.03.1999
(51) Int. Cl.: G01J 5/52, G01J 5/08

(54) **Pyrometer**
Pyrometer
Pyromètre

(30) Priorität: 04.03.1998 DE 19808972
(43) Veröffentlichungstag der Anmeldung: 08.09.1999
(73) Patentinhaber: Keller H.C.W. GmbH, 49479 Ibbenbüren-Laggenbeck (DE)
(72) Erfinder: Arlt, Uwe Peter, Dipl.-Phys., D-49479 Ibbenbüren (DE)
(74) Vertreter: Busse & Busse Patentanwälte

(56) Entgegenhaltungen:
- DE-C- 746 401
- GB-A- 272 799
- GB-A- 636 544

## Beschreibung

Die Erfindung betrifft ein Pyrometer gemäß Oberbegriff des Patentanspruchs 1.

Wegen des sehr kleinen Meßflecks (beispielsweise < 1 mm bei 1 m Meßabstand) sowie der dadurch erforderlichen Vergrößerungsoptik im Beobachtungsstrahlengang werden die gattungsgemäßen Pyrometer in der Praxis meist "Mikropyrometer" genannt.

Bei einem bekannten Pyrometer wird zur Ermittlung der Meßobjekttemperatur die Helligkeit des Meßobjekts mit der Helligkeit eines zum Glühen gebrachten Glühfadens einer in einem regelbaren Stromkreis angeordneten Glühfadenlampe verglichen. Der Lampenstrom wird dabei so lange nachgeregelt, bis Helligkeitsgleichheit zwischen Meßobjekt (Beobachtungsfeld) und Glühfaden (Vergleichsfeld) vorliegt. Es wird das Prinzip genutzt, daß ein bestimmter Lampenstrom (der zum Glühen des Glühfadens mit der Helligkeit wie die Meßobjekt-Abbildung erforderlich ist) auf eine bestimmte Meßobjekttemperatur schließen läßt.

Bei einem Mikropyrometer mit einer Glühfadenlampe als Vergleichslichtquelle oder Vergleichsstrahler besteht der Glühfaden meist aus einem sehr dünnen, ebenen (d.h. ungewendelten) und zwecks Verhinderung von Glühfaden-Verwerfungen bei ansteigenden Temperaturen außerdem spannungsfrei geglühten Wolfram-Draht. Die Glühfadenlampe selbst bedarf einer stundenlangen Voralterung unter Einwirkung hoher Temperaturen. Außerdem ist eine aufwendige Kennlinien-Kalibrierung, d.h. Ermittlung der Kalibrierkurve (Strom-Temperatur-Kennlinie), für alle Meßbereiche erforderlich.

Aufgrund dieser zeitaufwendigen Fertigungs- und Kalibriermaßnahmen ergibt sich ein hoher Preis für Glühfadenlampen - das Produkt "Mikropyrometer" läßt sich daher nicht kostengünstig herstellen.

Nachteilig ist auch, daß die der Drahtaufhängung dienenden Stifte des Glühfadens Wärme ableiten, wodurch es zu unterschiedlicher Temperaturverteilung längs des Glühfadens kommt. Es ist nur eine verhältnismäßig kurze Länge für den Abgleich nutzbar und der nutzbare Bereich muß gekennzeichnet sein. Der Einsatz von Glühfadenlampen zeigt in der Praxis mit steigender Glühfadentemperatur eine abnehmende Langzeitstabilität. Mit abnehmender Glühfadentemperatur zeigt sich eine zunehmende Umgebungstemperatur-Abhängigkeit (infolge der erwähnten Wärmeableitung an den Anschlußenden).

Wegen des kleinen Glühfaden-Querschnitts und der relativ großen Glühfaden-Länge mangelt es oftmals an der erforderlichen Stabilität, d.h. die mechanische Glühfaden-Belastbarkeit ist gering und läßt den Pyrometer-Einsatz in stoßbelasteter Umgebung kaum zu.

Die Nachteile der Glühfadenlampe können vermieden werden, wenn anstelle des Glühfadens eine beleuchtete Markierung verwendet wird, die im Beobachtungs-Sichtfeld des Pyrometers erscheint. Ausführungsbeispiele liefert dazu die Patentschrift GB 272 799A von R. Hase, welche ein Pyrometer beschreibt, bei dem der Helligkeitsabgleich zwischen der Objekthelliakeit und der Helligkeit der Vergleichsmarkierung über ein variables Graufilter, auch Graukeil genannt, vorgenommen wird. Dieses befindet sich entweder im Obiektivstrahlengang oder im Strahlengang der Lichtquelle, welche die Vergleichsmarkierung beleuchtet. Die Vergleichsmarkierung kann dabei reflektierend auf einen optisch transparenten Träger aufgebracht bzw. in diesen eingebettet sein oder umgekehrt transmittierend als Öffnung in einer verspiegelten Fläche vorgesehen werden, welche rückwärtig beleuchtet wird, wobei die Lichtquelle in allen Ausführungsformen mit konstantem Strom und damit näherungsweise konstanter Helligkeit betrieben wird. Dem Vorteil, daß die Lampenkennlinie deshalb nur an einem Punkt kalibriert werden muß, steht der Nachteil gegenüber, daß der Graukeil mit kleinen Toleranzen gefertigt und der Verlauf seiner Lichtdurchlässictkeit über den genutzten Verstellbereich exakt vermessen werden muß.

Dieser Aufwand läßt sich vermeiden, wenn die Helligkeit der Vergleichslichtquelle gemessen wird. In der Patentschrift DE 746 401 C von P. Tracz wird ein Pyrometer beschrieben, bei dem die Helligkeit einer Vergleichslichtquelle mittels einer Selenzelle erfaßt, die von ihr erzeugte EMK gemessen und als Temperatur angezeigt wird. Die Vergleichslichtquelle beleuchtet über eine Streuscheibe eine Spiegelmarkierung, welche auf einer Glasplatte aufgebracht ist. Der Beobachter betrachtet durch ein Okular mit Rotfilter die Spiegelmarkierung und verändert die Helligkeit der Vergleichslichtquelle so lange, bis die Markierung und das Meßobjekt, welches mittels einer Optik in die Ebene der Spiegelmarkierung abgebildet wird, gleich hell erscheinen. Zur Anpassung unterschiedlicher Helligkeiten von Objekt und Vergleichslichtquelle ist im Strahlengang des Objektivs ein Graufilter vor der Vergleichsmarkierung angebracht.

Der beschriebene Aufbau läßt die folgenden Nachteile erkennen:
1. Der von der Selenzelle erfaßte Raumwinkelbereich ist sehr groß um eine hohe EMK der Selenzelle zu erhalten. Wegen mechanischer Toleranzen der Lampe kann sich eine Winkelabhängigkeit des abgestrahlten Lichts ergeben und damit wird die gemessene EMK von der Einbaulage der Glühlampe abhängig. Auch die Lage der Wendel kann sich je nach eingestellter Helligkeit und Orientierung des Gerätes im Raum verschieben und damit Fehler hervorrufen.
2. Der Beobachter macht einen näherungsweise monochromatischen Helligkeits-Abgleich, wobei die kurzwellige Seite des Spektralbereichs durch das Rotfilter und die langwellige Seite durch die Augenempfindlichkeitskurve - die sogenannte V_{λ} -Kurve - begrenzt ist. Der von der Selenzelle erfaßte Spektralbereich ist davon aber völlig verschieden, weil die spektrale Empfindlichkeit der Selenzelle von der V_{λ}-Kurve des Auges abweicht und auch ein Rotfilter zur Begrenzung auf der kurzwelligen Seite fehlt. Da sich mit der eingestellten Heiligkeit der Vergleichslichtquelle auch deren spektrale Verteilung ändert, sind die vom Beobachter verglichenen und von der Selenzelle gemessenen Helligkeiten nicht mehr zueinander proportional.
   Aus diesem Grunde muß das Gerät dann individuell passend zur Lampe kalibriert werden, wobei auch Änderungen der Spektralcharakteristik der Lampe infolge Alterung die Gerätekalibrierung verändern.

Der Erfindung liegt die Aufgabe zugrunde, ein verbessertes gattungsgemäßes Pyrometer, sogen. Mikropyrometer, zu schaffen, welches unter Vermeidung von den sich aus einer Glühfadenlampe - als Vergleichsstrahler - ergebenden Nachteilen kostengünstiger herstellbar ist sowie einen einfachen, robusten Aufbau hat.

Erfindungsgemäß wird dies durch ein Pyrometer gemäß Patentanspruch 1 gelöst. Vorteilhafte Weiterbildungen ergeben sich aus den Unteransprüchen.

Erfindungswesentlich sind der Vergleichsstrahlengang und der Beobachtungsstrahlengang spektral aufeinander abgestimmt, d.h. der optische Spektralbereich des fotoelektrischen Empfängers (Fotosensor) zur Messung der Vergleichslichtquelle ist an den visuellen Spektralbereich des die Temperaturmessung vornehmenden Beobachters/Gerätebedieners angepaßt. Diese Anpassung erfolgt über ein dem Strahlungsempfänger zugeordnetes Farbfilter sowie ein dem Beobachter zugeordnetes Farbfilter.

Die Abweichung der relativen spektralen Empfindlichkeit des fotoelektrischen Empfängers (Fotosensors) im Vergleichsstrahlengang sollte gemäß einer vorteilhaften ist an jeder Stelle im spektralen Durchlaßbereich auf ≤ 20 % an die relative spektrale Empfindlichkeit des Beobachtungsstrahlengangs (inkl. "Standardbeobachter" mit normierter spektraler Empfindlichkeit V_{λ}) angepaßt Dies ermöglicht es, daß beim erfindungsgemäßen Mikropyrometer eine nach der Planck'schen Strahlungsformel für den jeweiligen Meßbereich berechnete Eichkurve (nach Abgleich des jeweiligen Bereichsanfangswertes und Bereichsendwertes) ohne gerätespezifische Korrektur verwendet werden kann, was im Vergleich zu einem Mikropyrometer mit Glühfadenlampe als Vergleichstrahler - wo eine Kalibrierung der Lampen-Kennlinie für alle Meßbereiche mit jeweils vielen Meßpunkten (etwa alle 50 - 100 °C) erforderlich ist - eine erhebliche Reduzierung der Kalibrierarbeit zuläßt und letztendlich auch eine vorteilhafte Senkung der Mikropyrometer-Herstellkosten bewirkt.

Von besonderem Vorteil ist, daß anstelle der präzise zu fertigenden, einzeln zu kalibrierenden und letztendlich sehr teuren Glühfadenlampen nun als Vergleichslichtquelle ein als Massenware erhältliches, preiswertes Element, nämlich a) entweder eine gewöhnliche Glühlampe, normalerweise mit gewendeltem Draht, aus der "Autoelektrik" bzw. aus dem "Modellbau" oder b) eine Leuchtdiode (LED), Anwendung findet. Dies ist möglich, weil bei der Erfindung die geometrische Form des Leuchtkörpers (Glühdrahtes) der Vergleichsguelle keine Rolle spielt.

Die spektrale Empfindlichkeit des Strahlungsempfängers ist hierbei vorteilhafterweise der nomierten Spektralempfindlichkeit eines Standardbeobachters V_{λ} angepaßt wobei das dem Strahlungsempfänger zugeordnete Farbfilter im sichtbaren Bereich dieselben spektralen Transmissionseigenschaften wie das dem Standardbeobachter zugeordnete Farbfilter aufweist.

Da der Bediener/Beobachter sowohl die Vergleichsstrahlung als auch die Meßobjektstrahlung im Gesichtsfeld des Pyrometer-Okulars einsehen soll, ist die als geometrischer Strahlteiler und Umlenkspiegel dienende Vergleichsmarkierung kleiner als die von der eingangsseitigen Pyrometer-Optik auf den Strahlengang-Kreuzungsbereich fokussierte Meßobjekt-Abbildung.

Die den kleinen Vergleichsfleck erzeugende Markierungsfläche kann in einem optisch transparenten Element eingebettet oder auf der Oberfläche eines optisch transparenten Element eingebettet oder auf der Oberfläche eines optisch transparenten Elements aufgebracht sein oder von einer Rahmenkonstruktion mit dünnen Stegen gehalten werden.

In bevorzugter Ausgestaltung der Erfindung wird die Vergleichsmarkierung diffus beleuchtet. Es kann jedoch auch die Vergleichsmarkierung selbst diffus reflektierend ausgeführt sein.

Gemäß einer bevorzugten Ausgestaltung wird die aus dem Stand der Technik als Vergleichsstrahler bekannte Glühfadenlampe durch einen Vergleichsstrahler ersetzt, welcher aus einem im Beobachtungsstrahlengang angeordneten Strahlteilerwürfel - mit auf der Schrägfläche eingekitteter, lichtquellenseitig reflektierend ausgebildeter Vergleichsmarkierung, vorzugsweise Markierungsstrich von max. 0,1 mm Breite - und aus einer den Strahlteilerwürfel beleuchtenden einstellbaren Lichtquelle besteht, wobei die spektrale Strahlungsleistung dieser Lichtquelle fotoelektrisch gemessen und zur Berechnung der Meßobjekttemperatur verwertet wird.

Ein erfindungsgemäßes Mikropyrometer hat gegenüber einem solchen mit Glühfadenlampe folgende Vorteile: a) Es benötigt keine spezielle und teure Vergleichslampe mit einem ungewendelten, speziell geformten Wolframdraht. b) Die Langzeitstabilität hängt nicht von den Eigenschaften einer Vergleichslampe ab, weil die Strahlungsleistung der einstellbaren Vergleichslichtquelle fotoelektrisch gemessen wird. c) Dadurch, daß die Strahlungsleistung der Vergleichslichtquelle gemessen und zur Berechnung der angezeigten Meßobjekttemperatur verwendet wird, entfällt die arbeitszeitaufwendige Messung von Strom-Temperatur-Kennlinien der Vergleichslichtquelle an/auf vielen Meßpunkten. d) Die Kennlinien-Streuungen der einzelnen Geräte sind stark vermindert, so daß sich ein wesentlich vereinfachter Abgleich ergibt.

Das erfindungsgemäße Mikropyrometer ist vorzugsweise derart ausgeführt, daß es eine Betrachtung von mindestens 5000:1 (1 mm Meßfleck-Breite oder Meßfleck-Größe aus 5 m Entfernung betrachtbar) zuläßt.

Auf den Zeichnungen sind ein kompletter Mikropyrometer-Aufbau sowie Varianten für dessen Strahlteiler-Ausbildung schematisch dargestellt und werden nachfolgend näher erläutert. Es zeigen: Fig. 1 ein Aufbauprinzip (im Pyrometer-Längsschnitt) eines erfindungsgemäßen Mikropyrometers mit visuellem Intensitätsabgleich von Meßobjekt- und Vergleichsstrahlung sowie fotoelektrischer Messung der Vergleichsstrahlung, Fig. 2 eine vergrößerte Darstellung (in Seitenansicht) des im Kreuzungspunkt von Beobachtungsstrahlengang und Vergleichsstrahlengang angeordneten Strahlteilers in Form eines Strahlteilerwürfels, wobei eine mittige reflektierende Vergleichsmarkierung vorhanden ist und die vom Meßfleck einerseits und von einem geräteeigenen Vergleichsstrahler andererseits stammenden Lichtstrahlen aufgezeigt werden, Fig. 3 eine vergrößerte Seitenansicht eines abgeänderten Strahlteilerwürfels mit integriertem asphärischem Linsenteil zur näherungsweise parallelen Bündelung der Vergleichsstrahlung, Fig. 4 eine Seitenansicht eines abgeänderten, als Kugel ausgeführten Strahlteilers mit zwischen zwei schräg zur Vergleichsstrahlung angeordneten Trennflächen und auf einem derselben vorgesehenem Vergleichsfleck sowie Fig. 5 eine Draufsicht auf einen Strahlteiler in Rahmenkonstruktion mit von dünnen geschwärzten Haltestegen getragener Vergleichsmarkierung.

Die Erfindung betrifft ein Pyrometer zur berührungslosen Temperaturmessung eines kleinen Meßflecks, welcher beispielsweise < 1 mm bei 1 m Meßabstand beträgt. In bevorzugter Weise ist es sogar derart ausgebildet, daß sich ein 1 mm großer Meßfleck auch aus etwa 3 - 5 m (ggf., sogar 7 m) Entfernung anpeilen und seine Temperatur genau ausmessen läßt.

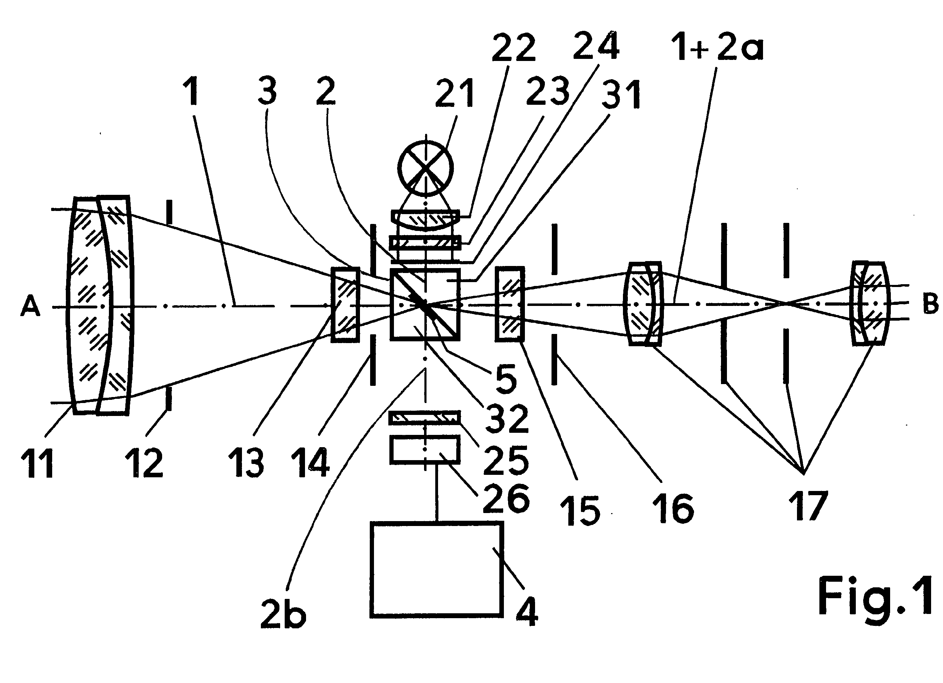

Gemäß Fig. 1 wird vom erfindungsgemäßen Mikropyrometer lediglich die StrahlenAnordnung und symbolisch die zugehörige Auswerteeinrichtung aufgezeigt. Die aus Fig. 1 ersichtlichen Elemente können alle in einem nicht dargestellten Pyrometergehäuse angeordnet sein - es läßt sich jedoch die sogen. Auswerteeinheit als externe Einheit vorsehen.

Die geräteeigene Hauptachse verläuft von A nach B und definiert den Beobachtungsstrahlengang 1, welcher von einem Vergleichsstrahlengang 2 gekreuzt wird. Im Kreuzungsbereich beider Strahlengänge befindet sich ein als Ganzes generell mit 3 bezifferter Strahlteiler, der als "geometrischer Strahlteiler" ausgeführt ist.

Wie aus Fig. 1 zu ersehen ist, weist der Beobachtungsstrahlengang 1 in bevorzugter Weise folgende Elemente auf: a) eine farbkorrigierte Optik 11, b) eine Blende 12, welche die Apertur (Eintrittsapertur) begrenzt, c) ggf. mindestens einen Graufilter 13, d) eine Blende 14, welche das Gesichtsfeld der Optik begrenzt, e) den Strahlteiler 3, f) einen Filter 15 (Rotglas oder Interferenzfilter), g) eine Blende 16 sowie h) eine als Ganzes mit 17 bezifferte Vergrößerungsoptik, das sogen. Mikroskop.

Im Vergleichsstrahlengang 2, der ab dem Strahlteiler 3 mit einem Vergleichslichtpfad 2a zum Okular und mit einem Meßlichtpfad 2b zu einer fotoelektrischen Meßeinrichtung führt, sind gemäß Fig. 1 in bevorzugter Weise folgende Elemente vorhanden: a) eine in der Helligkeit einstellbare Vergleichslichtquelle 21 in Form einer gewöhnlichen Glühlampe mit gewendeltem Glühdraht oder einer Leuchtdiode (LED), b) eine Sammellinse 22, als eine das Vergleichslicht in ein näherungsweise paralleles Bündel umwandelnde Einrichtung, c) ein Farbkorrekturfilter 23, d) ein Diffusor 24, wie Streuscheibe, Streufolie, Mattierung auf dem Strahlteiler 3 od. dgl., e) der Strahlteiler 3, f) mindestens ein Filter 25 sowie g) ein die Strahlungsleistung der Vergleichslichtquelle 21 fotoelektrisch messender und - bei Helligkeitsgleichgewicht von Meßobjektstrahlung und Vergleichsstrahlung - ein temperaturbestimmendes Signal erzeugender Fotosensor 26, welcher mit einer Auswerteeinrichtung 4 verbunden ist, welche aus den vom Fotosensor 26 erzeugten

Signalen die Meßobjekttemperatur errechnet und die Temperaturanzeige ermöglicht/bewirkt.

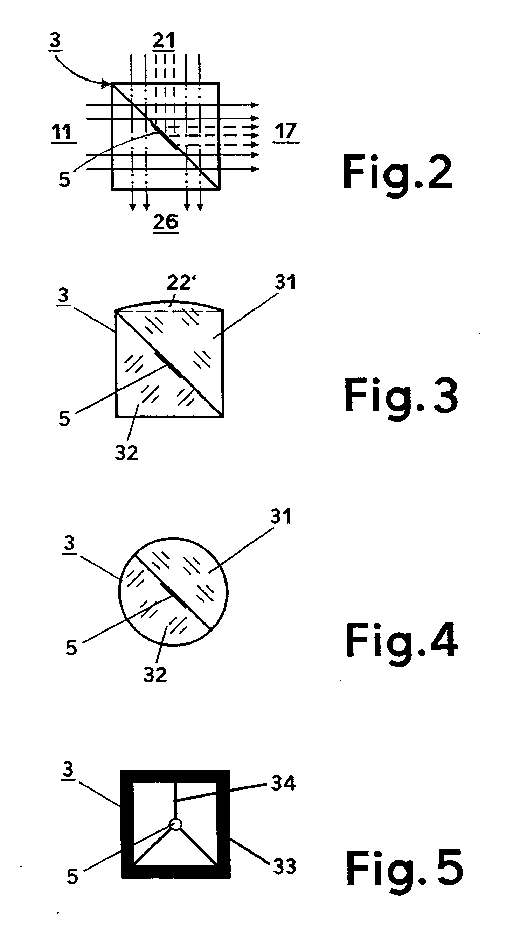

Bei der besonders bevorzugten Ausführungsform gemäß Fig. 1 ist der Strahlteiler 3 als Strahlteilerwürfel ausgebildet. Er besteht dabei aus zwei Prismen 31,32, deren Katheten einen Winkel von 90° zueinander und jeweils vorzugsweise 45° zu Hypothenusenfläche bilden. Das obere Prisma 31 ist auf der Hypothenusenfläche mit einer hochreflektierenden Vergleichsmarkierung 5 versehen, insbesondere bedampft, und mit dem unteren Prisma 32 zu einem Würfel blasenfrei verbunden, vorzugsweise verkittet. Das Verbindungsmittel (optischer Kitt, Kleber) weist den selben Brechungsindex wie das Würfelmaterial auf. Dasselbe gilt für die Abänderungen gemäß Fig. 3 und 4.

Die sorgfältige Auswahl von blasenfreiem Glas und optischem Kitt mit demselben Brechungsindex wie das bevorzugte Glas stellen sicher, daß sich außer der Vergleichsmarkierung 5 keine weiteren reflektierenden Objekte oder Flächen im Strahlteilerwürfel oder in der Strahlteilerkugel befinden.

Zur Vermeidung von Geisterbildern sind die Eintritts- und Austrittsfläche des Strahlteilerwürfels in Richtung der optischen Achse A-B vorzugsweise mit einer wirksamen Antireflexbeschichtung versehen.

Die Vergleichsmarkierung 5 wird durch die Vergleichslichtquelle 21 beleuchtet, deren Licht durch die Sammellinse 22 (vgl. Fig. 1) oder einem dem Strahlteilerwürfel zugeordneten Linsenteil 22' (vgl. Fig. 3) in ein näherungsweise paralleles Bündel umgewandelt wird.

Der überwiegende, nicht von der Vergleichsmarkierung 5 reflektierte Anteil des Lichtbündels der Vergleichslichtquelle 21 trifft auf den Fotosensor 26. Bei guter Übereinstimmung des für den Beobachter sichtbaren Spektralbereichs mit dem Spektralbereich des Fotosensors 5 läßt sich die Kalibrierkurve berechnen - insbesondere mit Hilfe der Planck'schen Strahlungsformel unter Berücksichtigung des spektralen Empfindlichkeitsverlaufs des Fotosensors 26. Damit wird die aufwendige Kennlinienkalibrierung der bisherigen Glühfaden-Vergleichslampen (Strom-, Temperatur-Kennlinie) vermieden. Statt dessen genügt beim erfindungsgemäßen Mikropyrometer in der Praxis der Abgleich am Bereichsanfang bzw. Bereichsende eines jeden Meßbereichs und evtl. noch eine kleine Korrektur in der Bereichsmitte (die aber meistens entfallen kann). Der Aufwand für die Pyrometer-Kalibrierung ist bei der Erfindung auf ein Minimum reduziert.

Das Sensorsignal vom Fotosensor 26 gelangt in eine Verstärkungs- und Linearisierungseinheit der Auswerteeinrichtung 4, welche insbesondere folgende, zeichnerisch nicht aufgesplittete Funktionseinheiten enthält: a) Vorverstärker, mit linearer Kennlinie oder mit definiert nicht linearer Kennlinie, z.B. der Form Y=log X oder Y=X^{a} (mit a <1 zur Dynamikkompression), b) Temperaturkompensation der Umgebungstemperatureinflüsse, c) Analog-Digital-Wandlung, d) Mikrorechner mit Programm- und Datenspeicher, e) Schnittstellen für Peripheriegeräte sowie f) ggf. Anzeigeeinheit.

In der Verstärkungs- und Linearisierungseinheit wird das Sensorsignal verstärkt und nach Umgebungstemperatur-Kompensation sowie Emissionsgrad-Korrektur in ein temperaturlineares Signal umgewandelt. Dieses gelangt über Schnittstellen an externe Peripheriegeräte, wie z.B. Drucker oder Computer, oder es wird an die geräteeigene Anzeige- und Bedieneinheit weitergegeben, die neben einem Display auch Eingabetasten oder Eingabeschalter beinhalten kann.

Bei der Strahlteiler-Ausführung gemäß Fig. 3 mit Linsenteil 22' erübrigt sich die separate Sammellinse 22 (vgl. Fig. 1).

In bevorzugter Weise ist die Vergleichsmarkierung 5 diffus beleuchtet. Es kann jedoch auch die Vergleichsmarkierung 5 diffus reflektierend ausgebildet sein.

Als Vergleichslichtquelle 21 wird vorzugsweise eine Soffittenlampe verwendet, wie sie in der Autoelektrik und im Modellbau als Preiswerte Massenware eingesetzt wird.

Die erfindungsgemäße Pyrometer-Ausbildung mit Vergleichsmarkierung 5 läßt eine verschiedenartige Gestaltung des Vergleichsflecks zu. So kann im Vergleich zu einer Ausführung mit Glühfadenlampe der benötigte Vergleichsfleck kundenspezifisch gestaltet werden, z.B. als Strich, V- oder Winkel-Abbildung, Kreuz, Kreis, Punkt u. dgl..

## Patentansprüche

1. Ein Pyrometer zur berührungslosen Temperaturmessung eines kleinen Meßflecks, mit
a.) einem Objektiv (11) und einem eine Vergrößerungsoptik (17) zum visuellen Vergleich der Helligkeit von Vergleichs- und Messobjektstrahlung in voneinander abgegrenzten, benachbarten Bildzonen aufweisenden Beobachtungsstrahlengang (1 + 2a),
b.) einer durch den Bediener in der Helligkeit einstellbaren Vergleichslichtquelle (21), welche einen in Transmissionsrichtung in zwei Lichtpfade (2a, 2b) aufgeteilten Vergleichsstrahlengang (2) beleuchtet, dessen erster Strahlengang (2a) zur Vergrösserungsoptik (17) und dessen zweiter Strahlengang (2b) zu einem Fotosensor (26) führt,
c.) einer reflektierenden Vergleichsmarkierung (5) im Kreuzungsbereich von Beobachtungsstrahlengang (1) und Vergleichsstrahlengang (2), welche im Okular-Gesichtfeld zusammen mit der Messobjektstrahlung einsehbar ist,
d.) einem Fotosensor (26), welcher die Strahlungsleistung der Vergleichslichtquelle (21) fotoelektrisch mißt und bei Helligkeitsgleichgewicht von Messobjektstrahlung und Vergleichsstrahlung ein temperaturbestimmendes Signal erzeugt und der mit einer Auswerteeinrichtung (4) verbunden ist,
**dadurch gekennzeichnet, daß**
das Pyrometer ein dem Photosensor (26) zugeordnetes erstes Farbfilter (25) sowie ein dem Beobachter zugeordnete zweites Farbfilter (15) aufweist, wobei die Abweichung der relativen spektralen Empfindlichkeit des Fotosensors (26) im Zusammenwirken mit dem ersten Farbfilter (25) an jeder Stelle im spektralen Durchlassbereich auf kleiner gleich 20 % an die relative spektrale Empfindlichkeit eines Standardbeobachters V_{λ} im Zusammenwirken mit dem zweiten Farbfilter (15) angepaßt ist.

2. Pyrometer nach Anspruch 1, **dadurch gekennzeichnet, daß** das durch die Lichtquelle (21) erzeugte und durch optische Komponenten (22), (23), (24) veränderte Lichtbündel sowohl die Vergleichsmarkierung (5) als auch den Fotosensor (26) beleuchtet.

3. Pyrometer nach einem der Ansprüche 1 und 2, **dadurch gekennzeichnet, daß** sich im Befeuchtungsstrahlengang (2) vor der Vergleichsmarkierung ein Farbkorrekturfilter (23) befindet.

4. Pyrometer nach einem der Ansprüche 1 bis 3, **dadurch gekennzeichnet, daß** die in der Helligkeit einstellbare Lichtquelle (21) eine im sichtbaren Spektralbereich emittierende Leuchtdiode ist.

5. Pyrometer nach Anspruch 1, **dadurch gekennzeichnet, daß** das zweite Farbfilter (15) im Beobachtungsstrahlengang ein Interferenzfilter ist.

6. Pyrometer nach einem der Ansprüche 1 bis 5, **dadurch gekennzeichnet, daß** sich im Meßstrahlengang (1) mindestens ein Graufilter (13) befindet.

7. Pyrometer nach einem der Ansprüche 1 bis 6, **dadurch gekennzeichnet, daß** die Vergleichsmarkierung (5) von einem reflektierenden Körper, wie Plättchen, Steg oder dergl., gebildet ist, welcher von einer reflexionsarmen Rahmen-Konstruktion (33) mit dünnen Haltestegen (34) getragen wird.

8. Pyrometer nach einem der Ansprüche 1 bis 7, **dadurch gekennzeichnet, daß** die Auswerteeinrichtung (4) einen Vorverstärker mit linearer oder definiert nicht linearer Kennlinie aufweist.

9. Pyrometer nach einem der Ansprüche 1 bis 8, **dadurch gekennzeichnet, daß** die Auswerteeinrichtung (4) einen Mikrorechner aufweist.

10. Pyrometer nach einem der Ansprüche 1 bis 9, **dadurch gekennzeichnet, daß** die Auswerteeinrichtung (4) zur Temperaturkompensation des Umgebungstemperatureinflusses ausgebildet ist.

11. Pyrometer nach einem der Ansprüche 1 bis 10, **dadurch gekennzeichnet, daß** die Auswerteeinrichtung (4) zur Emissionsaradkorrektur ausgebildet ist.

## Claims

1. A pyrometer for the contactless temperature measurement of a small measurement spot, with
a) an objective (11) and an observation beam path (1 + 2a) comprising a magnifying optics (17) for the visual comparison of the brightness of reference radiation and test-object radiation in adjacent image zones demarcated from one another,
b) a reference light source (21) adjustable in brightness by the user, which illuminates a reference beam path (2) split in the transmission direction into two light paths (2a, 2b), the first beam path (2a) whereof leads to the magnifying optics (17) and the second beam path (2b) whereof leads to a photosensor (26),
c) a reflecting reference marking (5) in the intersection region of observation beam path (1) and reference beam path (2), which can be observed in the eyepiece visual field together with the test-object radiation,
d) a photosensor (26), which measures the radiant power of the reference light source (21) photoelectrically and, in the presence of equality of brightness of the test-object radiation and the reference radiation, generates a temperature-determining signal, and which is connected to an evaluation device (4),
**characterised in that**
the pyrometer comprises a first colour filter (25) assigned to the photosensor (26) and a second colour filter (15) assigned to the observer, whereby the deviation of the relative spectral sensitivity of the photosensor (26) in combination with the first colour filter (25) at each point in the spectral pass-band at less than or equal to 20 % is adjusted to the relative spectral sensitivity of a standard observer V_{λ} in combination with the second colour filter (15).

2. The pyrometer according to claim 1, **characterised in that** the light bundle generated by the light source (21) and changed by optical components (22), (23), (24) illuminates both the reference marking (5) and the photosensor (26).

3. The pyrometer according to any one of claims 1 and 2, **characterised in that** a colour correction filter (23) is located in the illuminating beam path (2) in front of the reference marking.

4. The pyrometer according to any one of claims 1 to 3, **characterised in that** the light source (21) adjustable in brightness is a light-emitting diode emitting in the visible spectral region.

5. The pyrometer according to claim 1, **characterised in that** the second colour filter (15) in the observation beam path is an interference filter.

6. The pyrometer according to any one of claims 1 to 5, **characterised in that** at least one grey filter (13) is located in the measuring beam path (1).

7. The pyrometer according to any one of claims 1 to 6, **characterised in that** the reference marking (5) is formed by a reflecting body, such as a platelet, web or suchlike, which is carried by a low-reflection frame construction (33) with thin holding webs (34).

8. The pyrometer according to any one of claims 1 to 7, **characterised in that** the evaluation device (4) comprises a pre-amplifier with a linear or a defined non-linear characteristic curve.

9. The pyrometer according to any one of claims 1 to 8, **characterised in that** the evaluation device (4) comprises a microcomputer.

10. The pyrometer according to any one of claims 1 to 9, **characterised in that** the evaluation device (4) is designed for temperature compensation of the ambient temperature influence.

11. The pyrometer according to any one of claims 1 to 10, **characterised in that** the evaluation device (4) is designed for emittance correction.

## Revendications

1. Pyromètre pour la mesure de température sans contact d'un petit point de mesure, comprenant
a) un objectif (11) et une trajectoire du faisceau d'observation (1 + 2a) présentant un système optique d'agrandissement (17) pour une comparaison visuelle de la luminosité du rayonnement de référence et du rayonnement d'objet de mesure dans des zones d'image adjacentes, délimitées l'une par rapport à l'autre,
b) une source de lumière de référence (21), réglable en luminosité par l'utilisateur, éclairant une trajectoire du faisceau de référence (2) divisée en deux chemins optiques (2a, 2b) dans la direction de transmission, dont la première trajectoire du faisceau (2a) mène au système optique d'agrandissement (17) et dont la deuxième trajectoire du faisceau (2b) mène à un photocapteur (26),
c) un repère de référence réfléchissant (5) dans la zone d'intersection de la trajectoire du faisceau d'observation (1) et de la trajectoire du faisceau de référence (2) qui est visible dans le champ de vision de l'oculaire en même temps que le rayonnement d'objet de mesure,
d) un photocapteur (26) qui mesure de façon photoélectrique la puissance de rayonnement de la source de lumière de référence (21) et produit, en cas d'équilibre de luminosité entre le rayonnement d'objet de mesure et le rayonnement de référence, un signal déterminant la température et qui est relié à un dispositif d'évaluation (4),
**caractérisé en ce que**
le pyromètre présente un premier filtre de couleur (25) affecté au photocapteur (26) ainsi qu'un deuxième filtre de couleur (15) affecté à l'observateur, dans lequel l'écart de la sensibilité spectrale relative du photocapteur (26) en coopération avec le premier filtre de couleur (25), à chaque endroit de la bande de transmission spectrale, est adapté pour être inférieur ou égal à 20 % de la sensibilité spectrale relative d'un observateur standard V_{λ} en coopération avec le deuxième filtre de couleur (15).

2. Pyromètre selon la revendication 1, **caractérisé en ce que** le faisceau lumineux produit par la source de lumière (21) et modifié par les composants optiques (22), (23), (24) éclaire aussi bien le repère de référence (5) que le photocapteur (26).

3. Pyromètre selon l'une quelconque des revendications 1 et 2, **caractérisé en ce qu'**un filtre de correction de couleur (23) se trouve sur la trajectoire du faisceau d'éclairage (2) avant le repère de référence.

4. Pyromètre selon l'une quelconque des revendications 1 à 3, **caractérisé en ce que** la source de lumière (21) réglable en luminosité est une diode électroluminescente émettant dans le domaine spectral visible.

5. Pyromètre selon la revendication 1, **caractérisé en ce que** le deuxième filtre de couleur (15) sur la trajectoire du faisceau d'observation est un filtre d'interférence.

6. Pyromètre selon l'une quelconque des revendications 1 à 5, **caractérisé en ce que** sur la trajectoire du faisceau de mesure (1), il se trouve au moins un filtre gris neutre (13).

7. Pyromètre selon l'une quelconque des revendications 1 à 6, **caractérisé en ce que** le repère de référence (5) est formé par un corps réfléchissant, comme une plaquette, une barrette ou similaires, qui est porté par une construction d'encadrement faiblement réfléchissant (33) avec des barrettes de maintien minces (34).

8. Pyromètre selon l'une quelconque des revendications 1 à 7, **caractérisé en ce que** le dispositif d'évaluation (4) présente un préamplificateur avec une courbe caractéristique linéaire ou non linéaire de façon définie.

9. Pyromètre selon l'une quelconque des revendications 1 à 8, **caractérisé en ce que** le dispositif d'évaluation (4) présente un micro-ordinateur.

10. Pyromètre selon l'une quelconque des revendications 1 à 9, **caractérisé en ce que** le dispositif d'évaluation (4) est réalisé pour la compensation de température de l'influence de température ambiante.

11. Pyromètre selon l'une quelconque des revendications 1 à 10, **caractérisé en ce que** le dispositif d'évaluation (4) est réalisé pour la correction d'un pouvoir émissif.
